# EUROPÄISCHE PATENTSCHRIFT

(11) **EP 0 552 774 B1**
(45) Veröffentlichungstag und Bekanntmachung des Hinweises auf die Patenterteilung: **28.05.1997**
(21) Anmeldenummer: 93100912.0
(22) Anmeldetag: 21.01.1993
(51) Int. Cl.: B23B 29/24

(54) **Stufensenker**
Stepped countersinking tool
Outil de chanfreinage à étages

(30) Priorität: 23.01.1992 DE 4201716; 14.10.1992 DE 9213858 U
(43) Veröffentlichungstag der Anmeldung: 28.07.1993
(73) Patentinhaber: Müller, Alfred, D-73770 Denkendorf (DE)
(72) Erfinder: Müller, Alfred, W-7306 Denkendorf (DE)
(74) Vertreter: Seemann, Norbert W., Dipl.-Ing.

(56) Entgegenhaltungen:
- EP-A- 0 470 285
- DE-U- 8 321 950

## Beschreibung

Die Erfindung bezieht sich auf einen Stufensenker auf dem Gebiet der spanabhebenden Formgebung nach dem Oberbegriff des Patentanspruches 1 (siehe DE-U-83 21 950. 1).

Bekannt sich bereits derartige Werkzeuge mit Wechselschneidplatten, die fest in einen entsprechenden Sitz auf dem Werkzeugträger eingebettet und dort festgespannt sind. Aufgrund der allgemeinen Werkzeugtoleranzen sind mit derartigen Werkzeugen aber keine Präzisionsbohrungen o. dgl. zu erzielen. Darüber hinaus treten bei der Bearbeitung von Grund- und/oder Stufenbohrungen mit derartigen Werkzeugen an den vor allem planen Flächen Probleme bezüglich der Maßhaltigkeit und Oberflächengüte auf.

Bekannt ist weiterhin ein mehrstufiges Werkzeug nach der DE-U-83 21 950.1, bei dem die Schneidplatten in Schneidplattenhaltern aufgenommen sind.
Die Schneidplattenhalter selbst werden dort mit zwei in diesem verlaufenden, radial gerichteten, zueinander beabstandeten und stellbaren Stützschrauben gegen eine Fläche einer Ausnehmung abgestützt und mittels einer im Schneidplattenhalter zwischen den Stützschrauben angeordneten und zu deren Längsachsen schräg gerichteten Befestigungsschraube an den Ausnehmungsflächen festgesetzt. Eine axiale Verstellung kann durch einen auf das in Schneidrichtung gesehen hintere Ende eines Schneidplattenhalters einwirkenden Justierbolzen erzielt werden. Zudem liegen die beiden Stützschrauben in unterschiedlichen Ebenen.
Neben einem erhöhten Aufwand für Einstellarbeiten, zwei bzw. drei Schrauben sind einzustellen, ist weiterhin nachteilig, daß für die Einstellung der erforderlichen Lage der Schneiden der Schneidplatten ebenfalls ein hoher Zeitaufwand erforderlich ist, und daß durch die Abstützung der Schneidplattenhalter über drei Stützpunkte ungünstige Verhältnisse für die Schneidkraftaufnahme vorliegen.

Der im Patentanspruch 1 angegebenen Erfindung liegt daher das Problem zugrunde, einen mit (Wechsel-)Schneidplatten versehenen Stufensenker zu schaffen, der eine präzise Ausrichtung der Schneidplatten in radialer und axialer Richtung durch eine einfache Verstellbarkeit gestattet, selbst technisch einfach aufgebaut und vielseitig einsetzbar ist.

Dieses Problem wird mit den im Patentanspruch 1 angegebenen Mitteln und baulichen Maßnahmen gelöst: die abhängigen Ansprüche enthalten hierzu vorteilhafte Ausgestaltungen und Weiterbildungen des erfinderischen Grundgedankens.

Durch die präzise Einsteilmöglichkeit der Schneidplatten in erfindungsgemäßer Weise in radialer und axialer Richtung, ist eine sehr genaue Bearbeitung aller Flächen von Bohrungen, insbesondere des Bohrungsgrundes oder von Stufenbohrungen hinsichtlich der Maßhaltigkeit und der Oberflächengüte möglich.

Des weiteren erlaubt diese Erfindung größere Bearbeitungsvorschübe als bei den bekannten Lösungen, wodurch die Bearbeitungszeit wesentlich gesenkt werden kann.

Vorteilhaft ist auch das Vorsehen eines Sortiments von Schneidplattenhaltern entsprechend den gängigen Schneidplatten-Formen; dadurch ist eine enorme Werkzeugkostensenkung möglich, da prinzipiell nur ein Werkzeugträger notwendig ist.

Anhand von in den Zeichnungen schematisiert dargestellten Ausführungsbeispielen soll die Erfindung noch näher erläutert werden. Es zeigen:
- Fig. 1 und 2: den erfindungsgemäßen Stufensenker mit radialer und axialer Stellbarkeit der Schneidplatten in Drauf- und Vorderansicht,
- Fig. 2a - 2c: eine Ausführungsvariante des Stufensenkers mit radialer Stellbarkeit der Schneidplatten,
- Fig. 3a - 3d: einen Schneidplattenhalter in mehreren Ansichten und
- Fig. 4a - 4g: die schlittenartige Halterung in mehreren Gestaltungsvarianten und verschiedenen Ansichten,
wobei in den erläuteruden Figuren 2a, 2b, 2c und 4d keine Ausführungsformen der Erfindung dargestellt sind, und
wobei in den Fig. 1 - 3d wegen der Übersichtlichkeit einzelne Elemente nicht ständig gezeichnet sind.

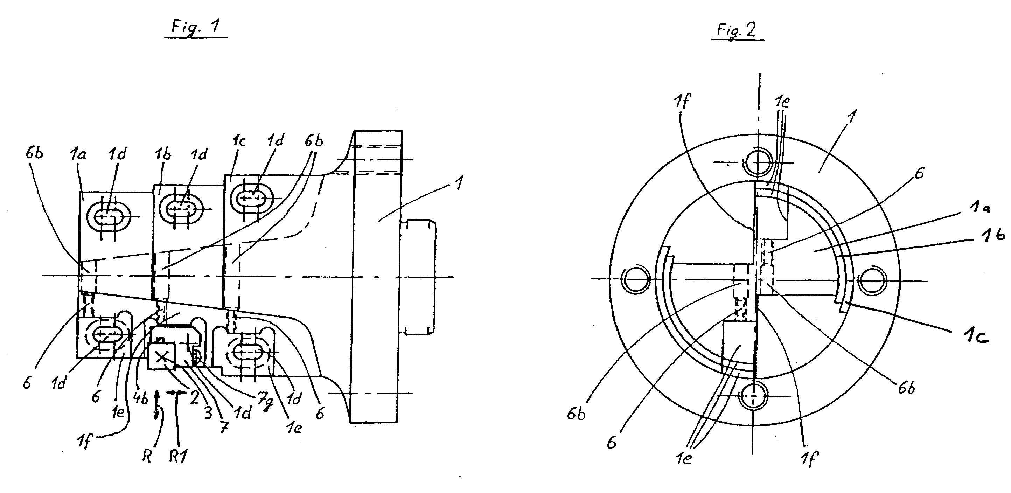

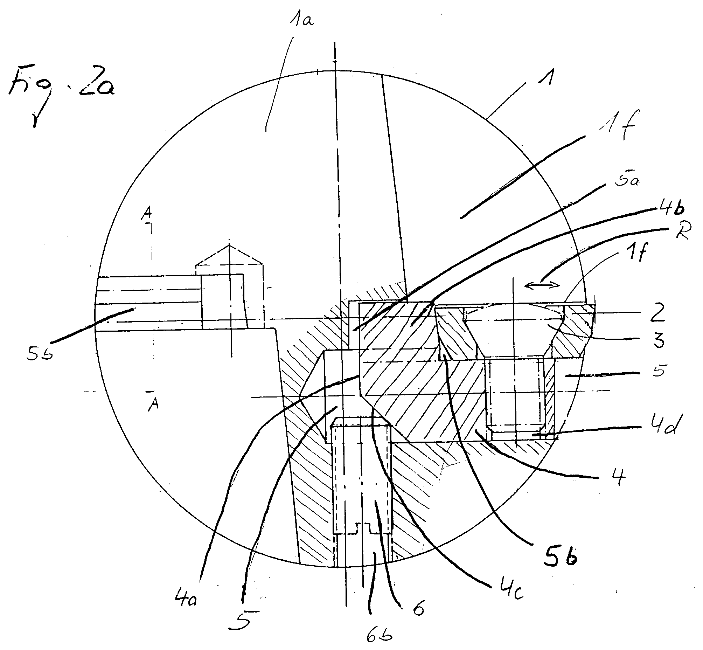

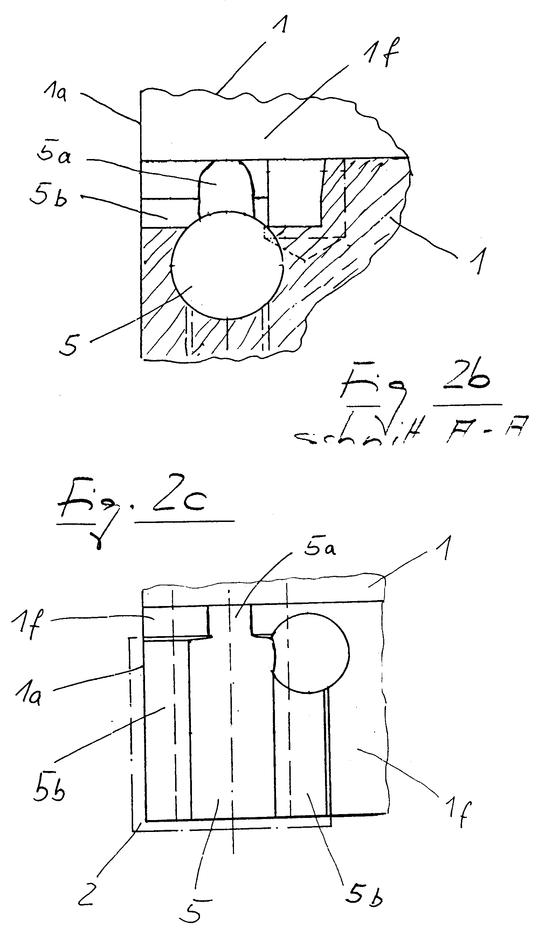

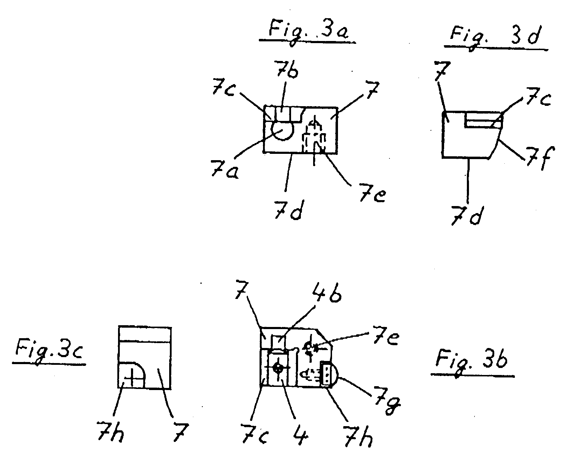

Die in den Fig. 1 bis 4g dargestellten Ausführungsbeispiele zeigen einen sogenannten Stufensenker mit am Umfang der einzelnen Stufen 1a, 1b, 1c des Werkzeugträgers 1 befestigten Wechsel-Schneidplatten 2.

Bei der Ausführung nach den Figuren 2a-2c, die nicht unter dem Schutzbereich des Anspruchs 1 fallen, verhält es sich so, daß die Schneidplatten 2 jeder Stufe 1a, 1b, 1c auf radial "R" im Werkzeugträger 1 verschieblich geführten, schlittenartigen Halterungen 4 aufgesetzt und letztere 4 in jeder beliebigen Durchmesserstellung gegenüber dem Werkzeugträger 1 festsetzbar sind.

In spezieller baulicher Ausgestaltung ist hierbei nun vorgesehen, daß die schlittenartigen Halterungen 4 in entsprechenden Aussparungen 5 des Werkzeugträgers 1 stellbar gelagert und in den Aussparungen 5 durch Anziehen der Spannschrauben 3 der Schneidplatten 2 durch letztere 2 in der jeweils gewünschten Stellung feststellbar sind; dabei stützt sich die in axialer Richtung hintere Fläche der Schneidplatte 2 am Werkzeugträger 1 ab.

Funktionserheblich ist hierbei zudem, daß die schlittenartigen Halterungen 4 ein diese gegen axiales Verdrehen sicherndes Führungsteil 4b aufweisen, das in eine entsprechende Zusatznut 5a o. dgl. der Aussparungen 5 des Werkzeugträgers 1 eingreift.

Das gesamte System ist dabei derart variabel ausgelegt, daß die der radialen Verstellung "R" dienenden Gewindestifte 6 o. dgl. als radiale Druckstücke von der Gegenseite des Werkzeugträgers 1 her auf die inneren Enden 4a der schlittenartigen Halterungen 4 gerichtet sind oder im Winkel β zu letzteren und über Keilflächen 4c, 6a als Stellantrieb.

Die Lage und Anordnung der vorgenannten Elemente und sie selbst sind in den Fig. 2a - 2c und 4e - 4g aufgezeigt.
Der Übersichtlichkeit halber ist nur eine Stufe, die Stufe 1a des Werkzeugträgers 1 gezeigt. So ist in der Fig.2a aus demselben Grund die Schneidplatte 2 und die schlittenartige Halterung 4 jeweils nur einmal eingezeichnet.
Der Schnitt A-A aus der Fig. 2a ist in der Fig. 2b um 180° gedreht dargestellt und Fig. 2c ist eine Draufsicht letzterer.
Die Fig. 2a - 2c zeigen eine mögliche konstruktive Gestaltung. Bei dieser ist nur eine radiale Stellbarkeit der Schneidplatten 2 vorgesehen.
Bei einem Ausführungsbeispiel der Erfindung für die radiale und axiale Stellbarkeit der Schneidplatten 2 wird verkörpert, daß die schlittenartige Halterung 4 aus dem Werkzeugträger 1 heraus in einem axial stell- und klemmbaren Schneidplattenhalter 7 verlagert ist.

Der Stufensenker mit am Umfang des Werkzeugträgers 1 jeweils auf radial R verschieblich geführter, schlittenartiger Halterung 4 befestigten (Wechsel-) Schneidplatten 2 weist in diesem Ausführungsbeispiel gemäß den Fig. 1 - 2 und 3a - 3d drei Stufen 1a - 1c auf. Vorzugsweise ist jede Stufe 1a - 1c mit mindestens zwei Schneidplatten versehen.

Es sind nun die Schneidplatten 2 auf und mit der besagten schlittenartigen Halterung 4 in parallel zur Werkzeugträgerlängsachse axial verstell- und arretierbare Schneidplattenhalter 7 angeordnet, wobei jeweils ein zur radialen Einstellung vorgesehener Gewindestift 6 in einer vorzugsweise im Werkzeugträger 1 vorhandenen, mit einem Gewindeteil versehenen und mit der Halterung 4 korrespondierenden Bohrung 6b gelagert ist. Die axiale Verstellrichtung ist mit R 1 bezeichnet.

Die Schneidplattenhalter 7 sind hier vorzugsweise derart in entsprechende Ausfräsungen 1 e eingepaßt, daß die gespannte Schneidplatte 2 mit ihrer oberen Fläche im wesentlichen mit der Spanabführung 1 f des Werkzeugträgers 1 übereinstimmt. Durch Anziehen einer nicht dargestellten, jeweils durch ein entsprechendes Senkloch 1 d o. dgl. hindurchragenden, in eine Gewindebohrung 7 e eingreifende Schraube o. dgl. wird dieser 7 am Werkzeugträger 1 in der jeweils vorgesehenen Stellung festgestellt. Die Schneiden der Schneidplatten 2 können in axialer Richtung sehr genau zueinander eingestellt werden.

In spezieller baulicher Weiterbildung ist das Senkloch 1 d langlochartig ausgeformt.

Die äußere Fläche 7 f der Schneidplattenhalter 7 ist entsprechend dem Durchmesser des Werkzeugträgers ein- oder mehrstufig abgeschrägt.

Weiterhin weisen die untere Fläche 7 d des Schneidplattenhalters 7 undd die dieser 7 d zugewandte Fläche der Ausfräsung 1 e jeweils eine aufeinander abgestimmt, achsparallel ausgerichtete Verzahnung o. dgl. auf. Bei Verstellung des Schneidplattenhalters 7 in axialer Richtung bleibt die radiale Lage der Schneidplatte 2 erhalten. Es können auch höhere Kräfte aufgenommen werden, ohne die eingestellte Position der Schneidplatte 2 zu gefährden.

Darüber hinaus ist zu einer sehr feinen Verstellung eine überwiegend in einer an dem Schneidplattenhalter 7 vorhandenen Vertiefung 7 h befindlichen, an ihrem Kopf mit einer Vielzahl radial gerichteter Vertiefungen versehene Stellschraube 7 g vorgesehen. Ihr Kopf stützt sich an der Rückwand der Ausfräsung 1 e ab.

Die in dem Absatz 7 c des Schneidplattenhalters 7 aufgenommene Schneidplatte 2 ist mit der in das Gewindeloch 4 d eingreifenden Spannschraube 3 an der schlittenartigen Halterung 4 befestigt. Diese 4 sitzt bei diesem Ausführungsbeispiel mit ihrem Führungsteil 4 b in den Aussparungen 7a und 7 b des Schneidplattenhalters 7.

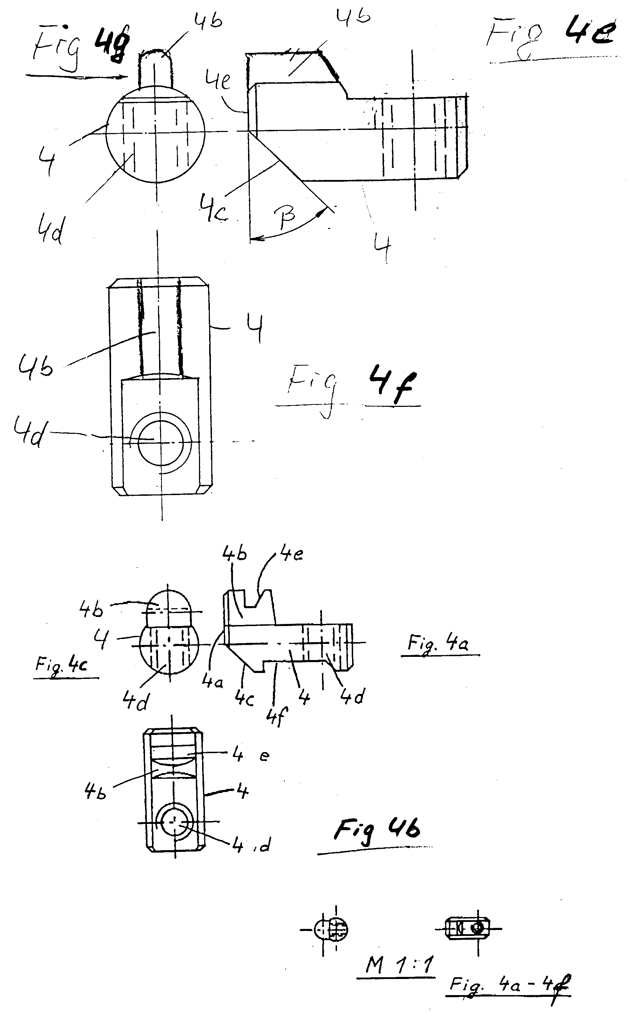

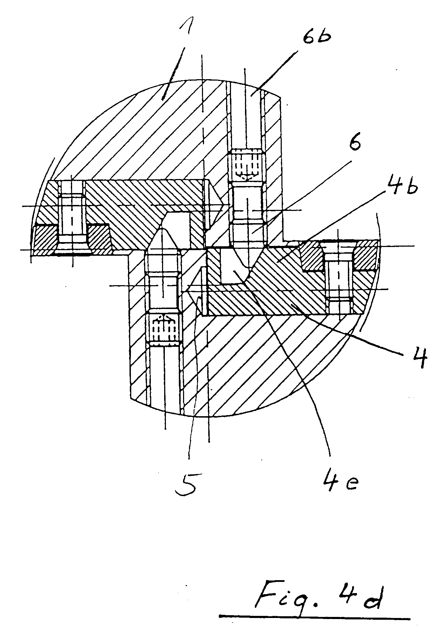

Eine Weiterbildung besteht darin, die vorgesehene, ein Führungsteil 4 b , ein Keilfläche 4 c und ein inneres Ende 4 a aufweisende schlittenartige Halterung 4 zusätzlich in ihrem unteren Bereich mit einer Begrenzungsnut 4 f und/oder in ihrem oberen Bereich, im Führungsteil 4 b, mit einer Keilnut 4 e zu versehen, (Fig. 4 a - 4 c). Damit ist die Halterung 4 vielseitiger verwendbar.

Die radiale Ver-/Einstellung der Schneidplatte 2 erfolgt über den mit der schlittenartigen Halterung 4 korrespondierenden Gewindestift 6, der selbst direkt auf das innere Ende 4 a oder die Keilfläche 4 c wirkt.

Weitere vorteilhafte, Weiterbildungen der aufgezeigten Ausführungsbeispiele hinsichtlich der radialen Einstellung werden folgend genannt.

Ein nicht weiter dargestellter, im Werkzeugträger 1 befindlicher Gewindestift greift in die Begrenzungsnut 4 f der Halterung 4 ein. Der Verstellbereich wird somit vorgegeben sowie die Halterung 4 gegen mögliches Herausschleudern bei Extrembelastungen gesichert. Bei dem Ausführungsbeispiel mit Schneidplattenhalter 7 ragt der besagte Gewindestift durch eine entsprechende, hier nicht weiter dargestellte Ausnehmung in diesem 7 hindurch. Es kann durchaus auch vorteilhaft sein, diesen besagten Gewindestift direkt im Schneidplattenhalter 7 anzuordnen.

Eine andere Weiterbildung besteht darin, zur Verstellung der Halterung 4 ihre Keilnut 4 e zu nutzen. Hierbei wäre dementsprechend die Bohrung 6 b mit Gewindestift 6 im Werkzeugträger 1 anzuordnen und das Führungsteil 4 b in seiner Länge zu gestalten, die Fig. 4 d veranschaulicht dieses. Hier ist der Einfachheit halber kein Schneidplattenhalter 7 dargestellt.
Bei Anwendung eines Ausführungsbeispieles mit einem Schneidplattenhalter 7 ragt der Gewindestift 6 durch diesen 7 hindurch oder ist in diesem 7 selbst vorgesehen.

Vorteilhaft ist hier, daß die für die axiale und radiale Einstellung der Schneidplatte 2 zu betätigenden Elemente von einer Seite her zugänglich sind.

Darüber hinaus wird das Verschieben der Halterung 4 einschließlich der Begrenzung und Sicherung von nur einer Elementengruppe - 6 b, 6, 4 e - vorgenommen.

Wie bei Schneidwerkzeugen bekannt, können in jeder Stufe 1 a - 1 c auch mehr als zwei Schneiden (-platten) vorgesehen sein. Es ist auch möglich, die erste oder eine der Stufen des Werkzeugträgers erfindungsgemäß und die weiteren 1 b - 1 c ... 1 n herkömmlich auszubilden. Dieses wird sich nach dem jeweils vorbestimmten Einsatz des Werkzeuges richten.

### Bezugszeichenverzeichnis

- 1: Werkzeugträger
- 1 a, 1 b, 1 c: Stufen
- 1 d: Senkloch
- 1 e: Ausfräsung
- 1 f: Spanabführung
- 2: Schneidplatte
- 3: Spannschraube
- 4: schlittenartige Halterung (Spannbolzen)
- 4 a: inneres Ende
- 4 b: Führungsteil
- 4 c: Keilfläche
- 4 d: Gewindeloch
- 4 e: Keilnut
- 4 f: Begrenzungsnut
- 5: Aussparung für Pos. 4
- 5 a: Aussparung für Pos. 4 b
- 5 b: Aussparung für Pos. 2
- 6: Gewindestift
- 6 a: Keilfläche
- 6 b: Bohrung
- 7: Schneidplattenhalter
- 7 a: Aussparung (für Pos. 4)
- 7 b: Aussparung (für Pos. 4 b)
- 7 c: Absatz
- 7 d: untere Fläche
- 7 e: Gewindebohrung
- 7 f: äußere Fläche
- 7 g: Stellschraube
- 7 h: Vertiefung
- R, R 1: Verstellrichtung
- β: Winkel (bei Keilfläche 4 c zu 6 a)

## Patentansprüche

1. Stufensenker mit am Umfang der einzelnen Stufen ( 1a, 1b, 1c ) des Werkzeugträgers ( 1 ) in einem Schneidplattenhalter gehalterten, radial und axial verstellbaren Schneidplatten ( 2 ), die mittels Spannschrauben o. a. Mitteln lösbar befestigt werden,
**gekennzeichnet dadurch,**
daß
a) jede der Schneidplatten ( 2 ) auf einer schlittenartigen, radial verschieblich geführten, mit einem Führungsteil ( 4b ) versehenen Halterung ( 4 ) aufgesetzt ist,
b) jede der Schneidplatten ( 2 ) jeweils mittels einer, in ein Gewindeloch ( 4d ) der Halterung ( 4 ) eingreifenden, Spannschraube ( 3 ) gehalten wird,
c) jeweils auf die Halterungen ( 4 ) einwirkende Verstellmittel ( 6, 6b ) im Werkzeugträger ( 1 ) vorgesehen sind,
f) jeweils die, eine Schneidplatte ( 2 ) haltende, schlittenartige Halterung ( 4, 4b ) in Aussparungen ( 7a, 7b ) eines parallel zur Werkzeugträgerlängsachse axial verstell- und arretierbaren Schneidplattenhalters ( 7 ) angeordnet ist,
g) am Schneidplattenhalter ( 7 ) ein die Schneidplatte ( 2 ) aufnehmender Absatz ( 7c ) vorgesehen ist und
h) jeder vorgesehene Schneidplattenhalter ( 7 ) in Ausfräsungen ( 1e ) des Werkzeugträgers ( 1 ) eingepaßt und durch Anziehen einer jeweils durch ein entsprechendes Senkloch ( 1d ) o.dgl. hindurchragenden, in eine Gewindebohrung ( 7e ) eingreifende Schraube o.dgl. am Werkzeugträger ( 1 ) in der jeweils gewünschten Stellung feststellbar ist.

2. Stufensenker nach Anspruch 1,
**dadurch gekennzeichnet,**
daß das jeweilige Senkloch (1d) langlochartig ausgebildet ist.

3. Stufensenker nach einem der Ansprüche 1 und 2,
**dadurch gekennzeichnet,**
daß die untere Fläche (7d) des Schneidplattenhalters (7) und die dieser (7d) zugewandte Fläche der Ausfräsung (1e) am Werkzeugträger (1) jeweils eine aufeinander abgestimmte, achsparallel ausgerichtete Verzahnung o. dgl. aufweisen.

4. Stufensenker nach einem der Ansprüche 1 bis 3,
**dadurch gekennzeichnet,**
daß der Schneidplattenhalter (7) eine überwiegend in einer an diesem vorhandenen Vertiefung (7h) befindlichen, an ihrem Kopf mit einer Vielzahl radial gerichteter Vertiefungen versehene Stellschraube (7g) aufweist.

5. Stufensenker nach einem der Ansprüche 1 bis 4,
**dadurch gekennzeichnet,**
daß die Schneidplattenhalter als Sortiment entsprechend den gängigen Schneidplatten-Formen dem Werkzeugträger (1) zugeordnet sind.

6. Stufensenker nach einem der Ansprüche 1 bis 5,
**dadurch gekennzeichnet,**
daß die ein Fuhrungsteil (4b), eine Keilfläche (4c) und ein inneres Ende (4a) aufweisende, schlittenartige Halterung (4) in ihrem unteren Bereich mit einer Begrenzungsnut (4f) und/oder in ihrem oberen Bereich, im Führungsteil (4b), mit einer Keilnut (4e) versehen ist.

7. Stufensenker nach Anspruch 6,
**dadurch gekennzeichnet,**
daß ein im Werkzeugträger (1) vorgesehener Gewindestift in die Begrenzungsnut (4f) eingreift.

8. Stufensenker nach Anspruch 6,
**dadurch gekennzeichnet,**
daß ein im Werkzeugträger (1) befindlicher, durch den Schneidplattenhalter (7) hindurchragender bzw. im Schneidplattenhalter (7) aneordneter Gewindestift in die Begrenzungsnut (4f) eingreift.

9. Stufensenker nach Anspruch 6,
**dadurch gekennzeichnet,**
daß der Gewindestift (6) in die Keilnut (4e) der schlittenartigen Halterung (4) ragt und mit dieser (4) zwecks ihrer radialen Verstellbarkeit in Wirkverbindung steht.

10. Stufensenker nach einem der Ansprüche 1 bis 5,
**dadurch gekennzeichnet,**
daß die der radialen Verstellung (R) dienenden Gewindestifte (6) o. dgl. als radiale Druckstticke von der Gegenseite des Werkzeugträgers (1) her auf die inneren Enden (4a) der schlittenartigen Halterungen (4) gerichtet sind oder im Winkel (β) zu letzteren und über Keilflächen (4c, 6a) als Stellenantrieb wirken.

## Claims

1. Stepped countersinking tool with radially and axially adjustable cutting plates (2) which are held at the circumference of the individual steps (1a, 1b, 1c) of the tool carrier (1) in a cutting plate holder and are detachably fastened by means of clamping screws or similar,
characterised thereby that
a) each of the cutting plates (2) is placed on a slide-like holder (4) which is guided to be radially displaceable and provided with a guide part (4b),
b) each of the cutting plates (2) is held by means of a respective clamping screw (3) engaging in a threaded hole (4d) of the holder (4),
c) adjusting means (6, 6b) respectively acting on the holders (4) are provided in the tool carrier (1),
f) the slide-like holder (4, 4b) holding a cutting plate (2) is arranged each time in recesses (7a, 7b) of a cutting plate holder (7) axially adjustable parallelly to the longitudinal axis of the tool carrier and lockable,
g) a ledge (7c) receiving the cutting plate (2) is provided at the cutting plate holder (7), and
h) each provided cutting plate holder (7) is fitted into milled-out recesses (1e) of the tool carrier (1) and fixable to the tool carrier (1) in the respectively desired setting by tightening of a respective screw or the like which projects through a corresponding countersunk hole (1d) or the like and engages in a threaded bore (7e).

2. Stepped countersinking tool according to claim 1, characterised thereby that the respective countersunk hole (1d) is formed to be slotlike.

3. Stepped countersinking tool according to one of claims 1 and 2, characterised thereby that the lower surface (7d) of the cutting plate holder (7) and the surface, which faces this (7d), of the milled-out recess (1e) at the tool carrier (1) have respective toothings or the like aligned to be axially parallel and matched to one another.

4. Stepped countersinking tool according to one of claims 1 to 3, characterised thereby that the cutting plate holder (7) comprises a setting screw (7g) which is predominantly disposed in a depression (7h) present at the holder and is provided at its head with a plurality of radially directed depressions.

5. Stepped countersinking tool according to one of claims 1 to 4, characterised thereby that the cutting plate holders are associated as a range corresponding to the current cutting plate shapes of the tool carrier (1).

6. Stepped countersinking tool according to one of claims 1 to 5, characterised thereby that the slide-like holder (4), which has a guide part (4b), a wedge surface (4c) and an inner end (4a), is provided in its lower region with a limiting groove (4f) and/or in its upper region in the guide part (4b) with a wedge groove (4e).

7. Stepped countersinking tool according to claim 7, characterised thereby that a threaded pin provided in the tool carrier (1) engages in the limiting groove (4f).

8. Stepped countersinking tool according to claim 6, characterised thereby that a threaded pin, which is disposed in the tool carrier (1) and projects through or is arranged in the cutting plate holder (7), engages in the limiting groove (4f).

9. Stepped countersinking tool according to claim 6, characterised thereby that the threaded pin (6) projects into the wedge groove (4e) of the slide-like holder (4) and stands in operative connection with this (4) for the purpose of its radial adjustability.

10. Stepped countersinking tool according to one of claims 1 to 5, characterised thereby that the threaded pins (6) or the like serving for the radial adjustment (R) are oriented as radial pressure members from the opposite side of the tool carrier (1) towards the inner ends (4a) of the slide-like holders (4) or at an angle (β) to the latter and act by way of wedge surfaces (4c, 6a) as setting drive.

## Revendications

1. Outil à chambrer étagé avec des plaquettes de coupe (2) radialement et axialement réglables maintenues dans un porte-plaquette sur la périphérie des étages individuels (1a, 1b, 1c) du porte-outil (1), qui sont fixées de manière amovible à l'aide de vis de serrage ou de moyens analogues,
**caractérisé** en ce que
a) chacune des plaquettes de coupe (2) est montée sur un support (4) du genre coulisseau, guidé en coulissement radial et pourvu d'une partie de guidage (4b),
b) chacune des plaquettes de coupe (2) est respectivement maintenue au moyen d'une vis de serrage (3) qui s'engage dans un trou fileté (4d) du support (4),
c) des moyens de réglage (6, 6b) agissant respectivement sur les supports (4) sont prévus dans le porte-outil (1),
f) le support (4, 4b) du genre coulisseau qui maintient une plaquette de coupe (2) est respectivement disposé dans des évidements (7a, 7b) d'un porte-plaquette (7) pouvant être réglé axialement et bloqué, parallèlement à l'axe longitudinal du porte-outil,
g) un décrochement (7c) recevant la plaquette de coupe (2) est prévu sur le porte-plaquette (7), et
h) chaque porte-plaquette prévu (7) est encastré dans des fraisures (1e) du porte-outil (1), et peut être bloqué dans la position respectivement souhaitée sur le porte-outil (1) en serrant une vis ou analogue qui traverse respectivement un trou fraisé correspondant (1d) ou analogue et s'engage dans un perçage fileté (7e).

2. Outil à chambrer étagé selon la revendication 1, **caractérisé** en ce que le trou fraisé respectif (1d) est configuré à la manière d'un trou oblong.

3. Outil à chambrer étagé selon une des revendications 1 et 2, **caractérisé** en ce que la face inférieure (7d) du porte-plaquette (7), et la face de la fraisure (1e) du porte-outil (1) qui est tournée vers cette face (7d), présentent des dentures respectives ou analogues mutuellement adaptées, orientées en parallélisme axial.

4. Outil à chambrer étagé selon une des revendications 1 à 3, **caractérisé** en ce que le porte-plaquette (7) présente une vis de réglage (7g), qui se trouve principalement dans un renfoncement (7h) présent sur le porte-plaquette (7) et qui est pourvue sur sa tête d'une pluralité de renfoncements orientés radialement.

5. Outil à chambrer étagé selon une des revendications 1 à 4, **caractérisé** en ce que les porte-plaquettes sont associées au porte-outil (1) sous forme d'assortiment correspondant aux formes courantes de plaquettes de coupe.

6. Outil à chambrer étagé selon une des revendications 1 à 5, **caractérisé** en ce que le support (4) du genre coulisseau, qui présente une partie de guidage (4b), une face biaise (4c) et une extrémité intérieure (4a), est pourvu d'une encoche de délimitation (4f) dans sa région inférieure et/ou d'une encoche biaise (4e) dans sa région supérieure, dans la partie de guidage (4b).

7. Outil à chambrer étagé selon la revendication 6, **caractérisé** en ce qu'une vis sans tête prévue dans le porte-outil (1) s'engage dans l'encoche de délimitation (4f).

8. Outil à chambrer étagé selon la revendication 6, **caractérisé** en ce qu'une vis sans tête se trouvant dans le porte-outil (1), laquelle traverse je porte-plaquette (7) ou encore est disposée dans le porte-plaquette (7), s'engage dans l'encoche de délimitation (4f).

9. Outil à chambrer étagé selon la revendication 6, **caractérisé** en ce que la vis sans tête (6) dépasse dans l'encoche biaise (4e) du support du genre coulisseau (4) et se trouve en liaison fonctionnelle avec ce dernier en vue de sa faculté de réglage radial.

10. Outil à chambrer étagé selon une des revendications 1 à 5, **caractérisé** en ce que les vis sans tête (6) ou analogues servant au réglage radial (R) sont orientés, en tant qu'éléments de pression radiale, depuis le côté antagoniste du porte-outil (1) sur les extrémités intérieures (4a) des supports du genre coulisseau (4), ou servent de vérin sous l'angle (β) par rapport à ces derniers et par l'intermédiaire de faces biaises (4c, 6a).
